# FASCICULE DE BREVET EUROPEEN

(11) **EP 1 327 471 B1**
(45) Date de publication et mention de la délivrance du brevet: **13.10.2004**
(21) Numéro de dépôt: 03290047.4
(22) Date de dépôt: 09.01.2003
(51) Int. Cl.: B01D 35/153, B01D 35/16, B01D 29/21, B01D 29/96

(54) **Filtre à liquide pour moteur à combustion interne**
Flüssigkeitsfilter für eine Brennkraftmaschine
Liquid filter for an internal combustion engine

(30) Priorité: 11.01.2002 FR 0200318
(43) Date de publication de la demande: 16.07.2003
(73) Titulaire: FILTRAUTO, 78180 Montigny le Bretonneux (FR)
(72) Inventeur: Legoff, Pascal, 92370 Chaville (FR); Lopez, Yann, 92160 Antony (FR); Sauve, Samuel, 91600 Savigny sur Orge (FR)
(74) Mandataire: Garel, Régis

(56) Documents cités:
- EP-A- 1 106 795
- WO-A-01/07819
- DE-U- 29 915 843
- US-A- 5 814 215

## Description

La présente invention se rapporte aux filtres à liquide pour moteur à combustion interne.

Plus particulièrement, l'invention concerne, parmi ces filtres à liquide, ceux qui comprennent :
- une embase qui présente un axe central et qui comprend un fond à partir duquel s'étend axialement une paroi annulaire,
- un couvercle adapté pour être fixé sur la paroi annulaire de l'embase en délimitant avec celle-ci une chambre de filtration fermée,
- une entrée de liquide communiquant avec la chambre de filtration,
- un canal de sortie de liquide ménagé dans l'embase et qui comprend un orifice de sortie centré sur l'axe central en communiquant avec la chambre de filtration,
- un canal de purge ménagé dans l'embase et qui comprend un orifice de purge centré sur l'axe central en communiquant avec le canal de sortie de liquide,
- une cartouche filtrante amovible disposée dans la chambre de filtration, cette cartouche filtrante étant centrée sur l'axe central de l'embase et présentant un puits central, et
- un obturateur disposé suivant l'axe central de l'embase et qui comprend une première portion d'extrémité tubulaire et une deuxième portion d'extrémité, ledit obturateur étant monté coulissant entre :
   . une position basse dans laquelle la première portion d'extrémité tubulaire coopère de façon étanche, d'une part, avec la cartouche filtrante pour assurer la communication entre le puits central de ladite cartouche filtrante et le canal de sortie de fluide, et pour assurer une étanchéité entre le puits central de la cartouche filtrante et l'entrée de liquide, et d'autre part, avec l'embase pour assurer l'étanchéité entre l'entrée de liquide et le canal de sortie de liquide, et dans laquelle la deuxième portion d'extrémité obture l'orifice de purge réalisé dans l'embase, et
   . une position haute dans laquelle au moins la deuxième portion d'extrémité ouvre l'orifice de purge en permettant la vidange de la chambre de filtration dans le canal de purge.

Dans les filtres à liquide de ce type, la première portion d'extrémité tubulaire de l'obturateur s'emboîte avec étanchéité radiale dans un alésage formant l'orifice de sortie du canal de sortie de liquide, lorsque l'obturateur est en position basse.

L'étanchéité radiale entre cette première portion d'extrémité tubulaire de l'obturateur et l'alésage de l'embase est obtenue par un joint d'étanchéité en élastomère rapporté autour de la première portion tubulaire de l'obturateur. On comprend donc qu'il existe un certain risque que ce joint rapporté soit enlevé, volontairement ou non, lors des opérations de remplacement de l'élément filtrant, après quoi l'étanchéité n'est plus assurée entre l'entrée de liquide à filtrer et le canal de sortie de liquide filtré.

Le "Gebrauchsmuster" DE 299 15 843 U1 divulgue un obturateur tubulaire comprenant une collerette rigide qui s' étend radialement vers l' extérieur et prend appui sur le bord biseauté de l' orifice de sortie de liquide. L' ensemble collerette et appui forment une vanne.

Avec une telle configuration, il existe un certain risque que l' appui soit encrassé et ne permet plus l'obtention d' une étanchéité parfaite.

La présente invention a notamment pour but de pallier cet inconvénient.

A cet effet, selon l'invention, un filtre à liquide du genre en question est caractérisé en ce que la première portion d'extrémité tubulaire de l'obturateur comprend une collerette élastiquement déformable qui s'étend radialement vers l'extérieur à partir de ladite première portion d'extrémité, en ce que ladite collerette prend appui en se déformant et de façon étanche sur un élément annulaire en saillie réalisé sur le fond de l'embase lorsque l'obturateur est en position basse pour assurer l'étanchéité entre l'entrée de liquide et le canal de sortie de liquide, et en ce que ladite collerette élastiquement déformable prend appui sur l'élément annulaire de l'embase suivant l'axe central.

Grâce à ces dispositions, on évite l'emploi d'un joint en élastomère comprimé radialement entre l'obturateur et l'embase, puisque le montage avec jeu axial et avec sollicitation élastique de la collerette par rapport à l'élément en saillie de l'embase, permet de garantir une force d'appui suffisante de l'obturateur contre l'embase, pour avoir une bonne étanchéité axiale.

Dans des modes de réalisation préférés de l'invention, on peut éventuellement avoir recours en outre à l'une et/ou à l'autre des dispositions suivantes :
- la collerette élastiquement déformable est rapportée sur la première portion d'extrémité tubulaire par collage ou par soudure,
- la collerette élastiquement déformable est formée d'une seule pièce avec l'obturateur,
- l'obturateur est réalisé à partir de matière plastique,
- l'élément annulaire en saillie est formé d'une seule pièce avec l'embase, et
- la première portion d'extrémité tubulaire de l'obturateur comprend, en outre, une seconde collerette qui s'étend radialement vers l'extérieur à partir de ladite première portion d'extrémité tubulaire et qui est adaptée pour assurer l'étanchéité entre le puits central de la cartouche filtrante et l'entrée de liquide.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale suivant l'axe central d'un filtre à liquide selon une forme de réalisation de l'invention, en position d'utilisation,
- la figure 2 est une vue en coupe verticale décalée par rapport à l'axe central du filtre à liquide représenté sur la figure 1, et
- la figure 3 est une vue en perspective de l'obturateur du filtre représenté sur les figures 1 et 2.

Le filtre ici considéré est destiné à filtrer l'huile de lubrification d'un moteur à combustion interne d'un véhicule automobile.

Ce filtre à liquide 1 comporte une embase 2 qui forme une cuve cylindrique de révolution centrée sur un axe central Z sensiblement vertical, cette cuve comportant :
- une paroi latérale annulaire 3 qui s'étend axialement jusqu'à une extrémité dotée d'un filetage interne 4,
- et un fond 5 qui est prolongé vers le bas par un appendice inférieur 6 qui délimite intérieurement un conduit de sortie de liquide 7 qui débouche latéralement de l'appendice inférieur 6. Le canal de sortie de liquide 7 débouche également à l'intérieur de la cuve 2 par un orifice de sortie 8 réalisé sur le fond 5 et centré sur l'axe central Z.

A l'extrémité supérieure ouverte de la paroi annulaire 3 de la cuve, est vissé un couvercle 9 qui comporte un filetage 10 complémentaire du filetage interne 4 de la cuve.

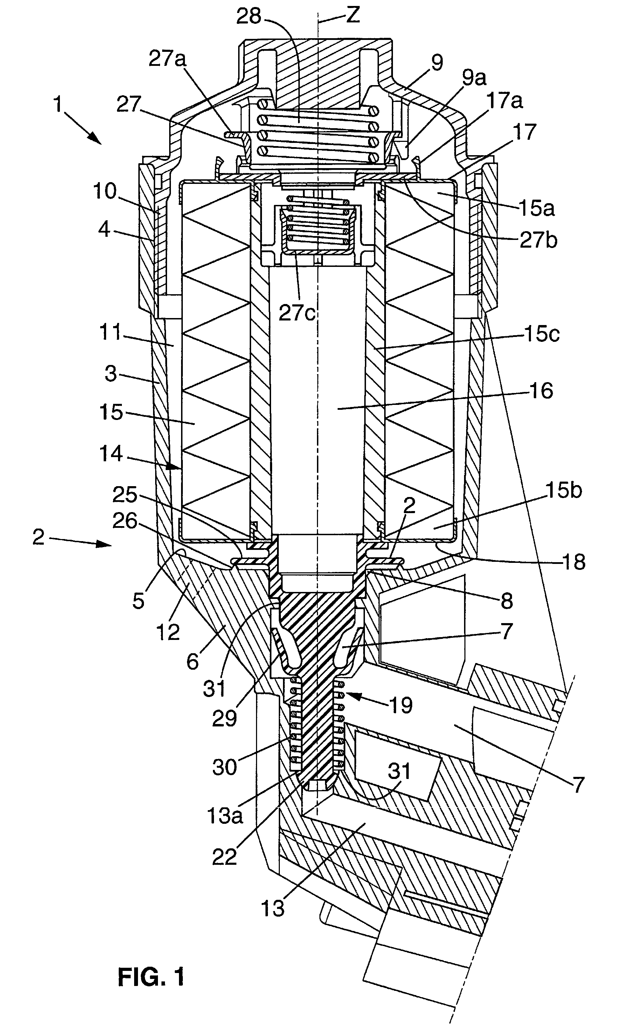

Lorsque le couvercle 9 est vissé sur l'embase 2, il délimite avec la cuve une chambre de filtration 11 fermée, qui communique avec l'extérieur uniquement par l'intermédiaire :
- d'une rentrée de liquide 12 (représentée en pointillés sur la figure 1) qui débouche sur le fond 5 de la cuve, dans une position excentrée par rapport à l'axe central Z,
- et du canal de sortie de liquide 7 susmentionné, lequel communique en partie inférieure avec un canal de purge 13 ménagé également dans l'appendice inférieur 6 de l'embase et qui comprend un orifice de purge 13a centré sur l'axe central Z tout en communiquant avec le canal de sortie de liquide 7.

Le filtre comprend également une cartouche filtrante 14 comportant un élément filtrant annulaire 15 qui délimite un puits central 16. Cet élément filtrant 15 s'étend axialement entre une extrémité supérieure 15a située à proximité du couvercle 9 et une extrémité inférieure 15b voisine du fond 5 de la cuve 2. Les extrémités supérieure 15a et inférieure 15b de l'élément filtrant 15 sont fixées de manière étanche respectivement à un flasque supérieur annulaire 17 et à un flasque inférieur annulaire 18.

L'élément filtrant 15 peut, par exemple, être constitué en papier plissé, c'est-à-dire plié selon des lignes en zig-zag qui s'étendent selon une direction axiale.

Suivant la nature des plis de l'élément filtrant 15, la cartouche filtrante 14 peut également comprendre une armature intérieure ajourée 15c de façon à renforcer l'élément filtrant 15.

Par ailleurs, chacun des deux flasques supérieur 17 et inférieur 18 peut être constitué en un matériau métallique ou en un matériau plastique rigide fixé de manière étanche, par collage ou par soudure, à l'extrémité de l'élément filtrant 15 qui lui est associé.

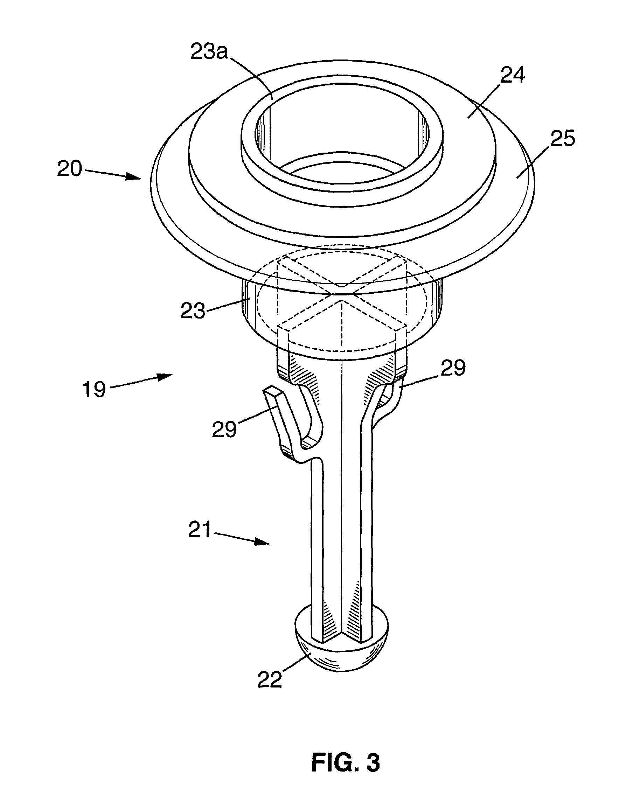

Le filtre comporte en outre un obturateur 19, avantageusement moulé en matière plastique, qui est bien visible sur la figure 3.

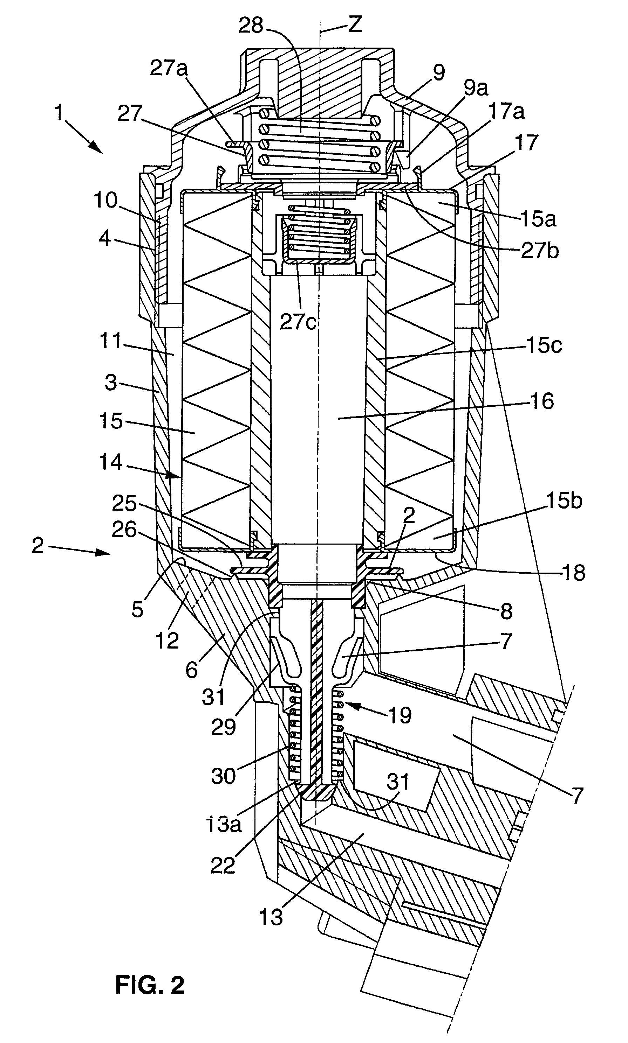

Cet obturateur 19 présente une première portion d'extrémité 20 sensiblement tubulaire et une deuxième portion d'extrémité 21 se présentant sous la forme d'une tige à section cruciforme qui s'étend selon l'axe central Z du filtre. La deuxième portion d'extrémité 21 de l'obturateur 19 s'étend jusqu'à une extrémité inférieure 22 formant un bouchon adapté pour obturer le canal de purge 13 ou plus exactement pour obturer l'orifice de purge 13a lorsque ledit obturateur 19 est en position basse d'utilisation (figures 1 et 2).

La première portion d'extrémité tubulaire 20 comprend quant à elle un manchon ou bague tubulaire 23 à partir duquel s'étend radialement vers l'extérieur, une collerette 24 adaptée pour assurer l'étanchéité entre le puits central 16 de l'élément filtrant 15 et l'entrée de liquide 12.

Par ailleurs, le manchon tubulaire 23 comprend également une collerette 25 élastiquement déformable disposée en dessous de la collerette 24. Cette collerette élastiquement déformable 25 s'étend également radialement vers l'extérieur à partir du manchon tubulaire 23. Comme on peut le voir sur les figures 1 et 2, cette collerette 25 prend appui sur un élément annulaire en saillie 26 réalisé sur le fond 5 de l'embase lorsque l'obturateur est en position basse.

Comme on peut le voir sur la figure 1, le couvercle 9 comprend des moyens de sollicitation élastique qui sollicitent constamment et axialement la cartouche filtrante 14 en direction du fond 5 de la cuve 2 afin de comprimer axialement la collerette élastiquement déformable 26 contre l'élément annulaire 26 de l'embase.

Afin d'assurer une étanchéité parfaite entre l'entrée de liquide 12 et le canal de sortie de liquide 7, la collerette élastiquement déformable 25 arrive en contact avec l'élément annulaire 26 de l'embase avant que l'extrémité inférieure 22 de l'obturateur n'arrive en contact avec l'orifice de purge 13a du canal de purge 13. Ainsi, lors du vissage du couvercle 9, la cartouche 14 continue à repousser l'obturateur 19 vers le bas jusqu'à ce que ladite extrémité inférieure 22 formant bouchon obture l'orifice de purge 13a, la collerette élastiquement déformable se déformant alors au contact de l'élément annulaire 26 pour assurer une étanchéité parfaite entre l'entrée de fluide 12 et le canal de sortie de liquide 17. Les moyens de sollicitation élastique du couvercle 9 comprennent par exemple une bague cylindrique 27 qui s'étend axialement et qui se termine par un rebord radialement extérieur 27a propre à coopérer aux fins d'accrochage avec des crochets élastiques 9a solidaires du couvercle 9. La bague 27 sert de logement à un ressort hélicoïdal de compression 28 interposé entre la portion intérieure de la bague 17 et le fond du couvercle 9. La bague 27 comprend également une collerette 27b qui s'étend radialement vers l'extérieur et qui prend appui sur le flasque supérieur 17 de la cartouche filtrante 14 pour la repousser axialement vers le fond 5 de la cuve 2. La bague 27 comprend également une portion inférieure 27c qui s'engage dans une ouverture centrale délimitée par le flasque supérieur annulaire 17 de la cartouche filtrante 14. La rondelle 27b de la bague 27 assure l'étanchéité entre le passage d'entrée de liquide 12 et l'extrémité supérieure du puits central 16 délimité par la cartouche filtrante 14.

L'obturateur 19 comporte également, à une position intermédiaire entre ces deux extrémités, au moins deux doigts de butée 29 élastiques qui divergent vers le haut et qui sont engagés à l'intérieur du canal de sortie de liquide 7.

Un ressort de compression 30 (figure 1) est interposé entre les deux doigts de butée 29 et un logement 31 au fond duquel est réalisé l'orifice de purge 13a du canal de purge 13.

Grâce à ces dispositions, lorsque l'on visse le couvercle 9 sur la cuve 2, les moyens de sollicitation élastique du couvercle 9 repoussent axialement vers le bas la cartouche filtrante 14, celle-ci repoussant à son tour l'obturateur 19 en position basse. Lorsque l'obturateur 19 est repoussé vers le bas, la collerette élastiquement déformable 25 vient tout d'abord en contact de butée avec l'élément annulaire en saillie 26 de l'embase 2, puis lorsque la cartouche filtrante 14 continue à descendre vers le bas, à la suite du vissage du couvercle 9 sur la paroi annulaire 3, l'extrémité inférieure 22 de l'obturateur 19 vient obturer l'orifice de purge 13a du canal de purge 13. La collerette élastiquement déformable 25 étant déjà en contact de butée avec l'élément annulaire en saillie 26, ladite collerette 25 se déforme alors et prend appui de façon étanche sur l'élément annulaire en saillie 26 en réalisant ainsi une étanchéité axiale parfaite entre l'entrée de liquide 12 et le canal de sortie de liquide 7.

A l'inverse, lorsqu'on dévisse le couvercle 9 en enlevant simultanément la cartouche filtrante 14 au moyen de crochets 17a réalisés sur le flasque supérieur 17 et qui coopèrent avec la rondelle 27b de la bague cylindrique 27, le ressort de compression 30 déplace l'obturateur 19 vers le haut, de sorte que le bouchon 22 qui forme l'extrémité inférieure de l'obturateur 19 ouvre le canal de purge 13, ce qui permet de vider la chambre de filtration 11 du liquide qu'elle contient.

De plus, au cours du mouvement d'enlèvement du couvercle 9 et de la cartouche filtrante 14, les doigts élastiques 29 de l'obturateur viennent en butée sous une collerette rigide interne 31 qui s'étend radialement vers l'intérieur à partir du canal de sortie de liquide 7, de sorte que l'obturateur 19 reste fixé à l'embase 2. Lorsque, après la vidange du circuit d'huile du véhicule, on remet en place une nouvelle cartouche filtrante 14, cette cartouche filtrante s'emboîte sur l'extrémité supérieure 23a du manchon 23 situé au-dessus de la collerette 24 et lors du vissage du couvercle 9, le bouchon 22 de l'obturateur 19 s'engage à nouveau dans l'orifice 13a du canal de purge 13 en le fermant.

## Revendications

1. Filtre à liquide pour moteur à combustion interne, comprenant:
- une embase (2) qui présente un axe central (Z) et qui comprend un fond (5) à partir duquel s'étend axialement une paroi annulaire (3),
- un couvercle (9) adapté pour être fixé sur la paroi annulaire (3) de l'embase (2) en délimitant avec celle-ci une chambre de filtration fermée (11),
- une entrée de liquide (12) communiquant avec la chambre de filtration (11),
- un canal de sortie de liquide (7) ménagé dans l'embase (2) et qui comprend un orifice de sortie (8) centré sur l'axe central (Z) en communiquant avec la chambre de filtration (11),
- un canal de purge (13) ménagé dans l'embase (2) et qui comprend un orifice de purge (13a) centré sur l'axe central (Z) en communiquant avec le canal de sortie de liquide (7),
- une cartouche filtrante amovible (14) disposée dans la chambre de filtration (11), cette cartouche filtrante étant centrée sur l'axe central (Z) de l'embase (2) et présentant un puits central (16), et
- un obturateur (19) disposé suivant l'axe central (Z) de l'embase (2) et qui comprend une première portion d'extrémité tubulaire (20) et une deuxième portion d'extrémité (21), ledit obturateur (19) étant monté coulissant entre :
. une position basse dans laquelle la première portion d'extrémité tubulaire (20) coopère de façon étanche, d'une part, avec la cartouche filtrante (14) pour assurer la communication entre le puits central (16) de ladite cartouche filtrante et le canal de sortie de fluide (7), et pour assurer une étanchéité entre le puits central (16) de la cartouche filtrante (14) et l'entrée de liquide (12), et d'autre part, avec l'embase (2) pour assurer l'étanchéité entre l'entrée de liquide (12) et le canal de sortie de liquide (7), et dans laquelle la deuxième portion d'extrémité (21) obture l'orifice de purge (13a) réalisé dans l'embase (2), et
. une position haute dans laquelle au moins la deuxième portion d'extrémité (21) ouvre l'orifice de purge (13a) en permettant la vidange de la chambre de filtration (11) dans le canal de purge (13),
**caractérisé en ce que** la première portion d'extrémité tubulaire (20) de l'obturateur (19) comprend une collerette élastiquement déformable (25) qui s'étend radialement vers l'extérieur à partir de ladite première portion d'extrémité (20), **en ce que** ladite collerette (25) prend appui en se déformant et de façon étanche sur un élément annulaire en saillie (26) réalisé sur le fond (5) de l'embase (2) lorsque l'obturateur (19) est en position basse pour assurer l'étanchéité entre l'entrée de liquide (12) et le canal de sortie de liquide (7), et **en ce que** ladite collerette élastiquement déformable (25) prend appui sur l'élément annulaire (26) de l'embase (2) suivant l'axe central (Z).

2. Filtre selon la revendication 1, dans lequel la collerette élastiquement déformable (25) est rapportée sur la première portion d'extrémité tubulaire (20) par collage ou par soudure.

3. Filtre selon la revendication 1, dans lequel la collerette élastiquement déformable (25) est formée d'une seule pièce avec l'obturateur (19).

4. Filtre selon l'une quelconque des revendications précédentes, dans lequel l'obturateur (19) est réalisé à partir de matière plastique.

5. Filtre selon l'une quelconque des revendications précédentes, dans lequel l'élément annulaire en saillie (26) est formé d'une seule pièce avec l'embase (2).

6. Filtre selon l'une quelconque des revendications précédentes, dans lequel la première portion d'extrémité tubulaire (20) de l'obturateur (19) comprend, en outre, une seconde collerette (24) qui s'étend radialement vers l'extérieur à partir de ladite première portion d'extrémité tubulaire (20) et qui est adaptée pour assurer l'étanchéité entre le puits central (16) de la cartouche filtrante (14) et l'entrée de liquide (12).

## Patentansprüche

1. Flüssigkeitsfilter für einen Verbrennungsmotor, welcher
- ein Unterteil (2), das eine mittige Achse (Z) besitzt und einen Boden (5) umfasst, ab welchem sich eine ringförmige Wandung (3) axial erstreckt,
- einen Deckel (9), der geeignet ist, um auf der ringförmigen Wandung (3) des Unterteils (2) befestigt zu werden, wobei er mit ihr eine geschlossene Filterkammer (11) begrenzt,
- einen Flüssigkeitseinlass (12), der mit der Filterkammer (11) in Verbindung steht,
- einen Auslasskanal (7) für die Flüssigkeit, der im Unterteil (2) angebracht ist und eine auf die mittige Achse (Z) zentrierte Auslassöffnung (8), die mit der Filterkammer (11) in Verbindung steht, umfasst,
- einen Ablasskanal (13), der in dem Unterteil (2) angebracht ist und eine auf die mittige Achse (Z) zentrierte Ablassöffnung (13a) umfasst, die mit dem Auslasskanal (7) für die Flüssigkeit in Verbindung steht,
- eine in der Filterkammer (11) angeordnete, lösbare Filterpatrone (14), die auf die mittige Achse (Z) des Unterteils (2) zentriert ist und einen mittigen Hohlraum (16) besitzt, und
- einen in der mittigen Achse (Z) des Unterteils (2) angeordneten Verschluss (19), der einen röhrenförmigen ersten Endteil (20) und einen zweiten Endteil (21) enthält,
umfasst, wobei der Verschluss (19) zwischen
• einer unteren Position, in welcher der röhrenförmige erste Endteil (20) einerseits mit der Filterpatrone (14), um die Verbindung zwischen dem mittigen Hohlraum (16) der Filterpatrone und dem Auslasskanal (7) für das Fluid und um Dichtheit zwischen dem mittigen Hohlraum (16) der Filterpatrone (14) und dem Flüssigkeitseinlass (12) sicherzustellen, und andererseits mit dem Unterteil (2) dicht zusammenwirkt, um Dichtheit zwischen dem Flüssigkeitseinlass (12) und dem Auslasskanal (7) für die Flüssigkeit sicherzustellen, und in welcher der zweite Endteil (21) die im Unterteil (2) ausgeführte Ablassöffnung (13a) verschließt, und
• einer oberen Position, in welcher mindestens der zweite Endteil (21) die Ablassöffnung (13a) öffnet, wobei sie die Entleerung der Filterkammer (11) in den Ablasskanal (13) ermöglicht, hin- und hergehend angebracht ist,
**dadurch gekennzeichnet, dass** der röhrenförmige erste Endteil (20) des Verschlusses (19) einen elastisch verformbaren Flansch (25) umfasst, der sich radial nach außen ab dem ersten Endteil (20) erstreckt, **dass** der Flansch (25), indem er sich verformt, dicht auf einem vorstehenden ringförmigen Element (26), das über dem Boden (5) des Unterteils (2) ausgeführt ist, aufliegt, wenn sich der Verschluss (19) in unterer Position befindet, um die Dichtheit zwischen dem Flüssigkeitseinlass (12) und dem Auslasskanal (7) für die Flüssigkeit sicherzustellen, **und dass** der elastisch verformbare Flansch (25) auf dem ringförmigen Element (26) des Unterteils (2) in der mittigen Achse (Z) aufliegt.

2. Filter nach Anspruch 1, in welchem der elastisch verformbare Flansch (25) durch Kleben oder Schweißen an den röhrenförmigen ersten Endteil (20) angesetzt worden ist.

3. Filter nach Anspruch 1, in welchem der elastisch verformbare Flansch (25) zusammen mit dem Verschluss (19) einteilig ausgebildet worden ist.

4. Filter nach einem der vorhergehenden Ansprüche, in welchem der Verschluss (19) aus Kunststoff hergestellt worden ist.

5. Filter nach einem der vorhergehenden Ansprüche, in welchem das vorstehende ringförmige Element (26) zusammen mit dem Unterteil (2) einteilig ausgebildet worden ist.

6. Filter nach einem der vorhergehenden Ansprüche, in welchem der röhrenförmige erste Endteil (20) des Verschlusses (19) außerdem einen zweiten Flansch (24) umfasst, der sich ab dem röhrenförmigen ersten Endteil (20) radial nach außen erstreckt und geeignet ist, um die Dichtheit zwischen dem mittigen Hohlraum (16) der Filterpatrone (14) und dem Flüssigkeitseinlass (12) sicherzustellen.

## Claims

1. Liquid filter for an internal combustion engine, comprising:
- a mounting flange (2) having a centre axis (Z) and comprising a bottom (5) from which an annular wall (3) extends axially,
- a cover (9) adapted to be fixed to the annular wall (3) of the mounting flange (2), thereby delimiting together with the latter a closed filtration chamber (11),
- a liquid inlet (12) communicating with the filtration chamber (11),
- a liquid outlet channel (7) provided in the mounting flange (2) and comprising an outlet orifice (8) centred on the centre axis (Z) so that it communicates with the filtration chamber (11),
- a purging channel (13) provided in the mounting flange (2) and comprising a purging orifice (13a) centred on the centre axis (Z) so that it communicates with the liquid outlet channel (7),
- a removable filter cartridge (14) disposed in the filtration chamber (11), this filter cartridge being centred on the centre axis (Z) of the mounting flange (2) and having a central well (16), and
- a closing device (19) disposed along the centre axis (Z) of the mounting flange (2) and comprising a first tubular end portion (20) and a second end portion (21), the said closing device (19) being mounted to slide between:
• a lower position in which the first tubular end portion (20) cooperates in a sealed manner, on the one hand, with the filter cartridge (14) in order to ensure communication between the central well (16) of the said filter cartridge and the fluid outlet channel (7) and in order to ensure sealing between the central well (16) of the filter cartridge (14) and the liquid inlet (12) and, on the other hand, with the mounting flange (2) in order to ensure sealing between the liquid inlet (12) and the liquid outlet channel (7), and in which the second end portion (21) closes the purging orifice (13a) provided in the mounting flange (2), and
• an upper position in which at least the second end portion (21) opens the purging orifice (13a) allowing the filtration chamber (11) to be emptied into the purging channel (13),
**characterised in that** the first tubular end portion (20) of the closing device (19) comprises an elastically deformable collar (25) extending radially towards the exterior from the said first end portion (20), **in that** the said collar (25) bears in a deformed and sealed manner against a projecting annular element (26) provided on the bottom (5) of the mounting flange (2) when the closing device (19) is in the lower position in order to ensure sealing between the liquid inlet (12) and the liquid outlet channel (7), and **in that** the said elastically deformable collar (25) bears against the annular element (26) of the mounting flange (2) along the centre axis (Z).

2. Filter according to claim 1, in which the elastically deformable collar (25) is attached to the first tubular end portion (20) by gluing or welding.

3. Filter according to claim 1, in which the elastically deformable collar (25) is formed in one piece with the closing device (19).

4. Filter according to any one of the preceding claims, in which the closing device (19) is made of plastic.

5. Filter according to any one of the preceding claims, in which the projecting annular element (26) is formed in one piece with the mounting flange (2).

6. Filter according to any one of the preceding claims, in which the first tubular end portion (20) of the closing device (19) moreover comprises a second collar (24) extending radially towards the exterior from the said first tubular end portion (20) and adapted to ensure sealing between the central well (16) of the filter cartridge (14) and the liquid inlet (12).
